# EUROPÄISCHE PATENTANMELDUNG

(11) **EP 1 130 356 A1**
(43) Veröffentlichungstag der Anmeldung: **05.09.2001**
(21) Anmeldenummer: 01101945.2
(22) Anmeldetag: 29.01.2001
(51) Int. Cl.: G01C 21/26

(54) **Navigationssystem für ein Kraftfahrzeug**

(30) Priorität: 21.02.2000 DE 10007813
(71) Anmelder: BECKER GmbH, D-76307 Karlsbad (DE)
(72) Erfinder: Wietzke, Joachim, Dr.-Ing., 76228 Karlsruhe (DE); Lappe, Dirk, Dipl.-Ing., 76228 Karlsruhe (DE)
(74) Vertreter: Patentanwälte Westphal, Mussgnug & Partner

(57) **Zusammenfassung**

Die Erfindung betrifft ein Navigationssystem für ein Kraftfahrzeug und ein Verfahren zum Betreiben eines solchen Navigationssystems, bei denen Positionsdaten über die momentane Fahrzeugposition, die durch eine Momentanposition-Erfassungseinrichtung mit Hilfe von Kartendaten ermittelt wurden, mit Bilddaten einer Mustererkennungseinrichtung kombiniert, ausgewertet und dem Fahrzeugnutzer zur Verfügung gestellt. Dadurch wird - insbesondere durch Ausnutzung von redundanten Informationen - die Informationssicherheit für den Kraftfahrzeugnutzer signifikant gesteigert.

## Beschreibung

Die Erfindung betrifft ein Navigationssystem für ein Kraftfahrzeug und ein Verfahren zum Betreiben eines solchen Navigationssystems.

Navigationssysteme sind, wie die Bezeichnung schon andeutet, Systeme die über detaillierte Informationen der aktuellen Position eines Kraftfahrzeuges verfügen und diese Informationen dem Kraftfahrzeugnutzer zur Verfügung stellen. Solche Navigationssysteme sind seit vielen Jahren in unzähligen Ausführungsformen bekannt und bedürfen keiner detaillierten Beschreibung.

Verfahren zur Mustererkennung bestehen gewöhnlich aus einem Funktionsblock zur Verarbeitung, einem nachfolgenden Block zur Segmentierung, evtl. einer Clusterung unterschiedlicher Bildbereiche und in jedem Fall einer nachfolgenden Klassifizierung. Solche Mustererkennungssysteme sind seit vielen Jahren bekannt und bedürfen keiner besonderen Beschreibung.

Als Besonderheit gilt hier, daß der Klassifikator sehr einfach gewählt werden kann. So ist es möglich, die Mustererkennung bei gering verfügbarer Rechenleistung auf Ortsschilder zu begrenzen. Eine einfache Vektorclusterung führt schon zu einer Erkennung eines Schildes.

Navigationssysteme benötigen zur Feststellung des Standortes eines Kraftfahrzeuges verschiedene Meßdaten. Das sind z. B. Daten von einer Wegerfassungseinrichtung, einem elektronischen Kompaß und einer GPS-Empfangseinheit (GPS = Global Positioning System). Mit Hilfe der von der Wegerfassungseinrichtung und dem elektronischen Kompaß gelieferten Signale werden von einer Steueranordnung Positionsdaten ermittelt. Die GPS-Empfangseinheit liefert anhand empfangener Satellitendaten die gegenwärtige Position des Kraftfahrzeuges. Ferner enthält ein Navigationssystem eine Speichereinrichtung, in der die erforderlichen Kartendaten, beispielsweise Straßenverläufe, Kreuzungen, Gebäude, etc., abgelegt sind. Mittels einer Verarbeitungseinrichtung lassen sich die Positionsdaten und Kartendaten derart verarbeiten, daß über eine Anzeigeeinrichtung der Kraftfahrzeugnutzer immer die genaue Position des Kraftfahrzeuges erhält.

Allerdings lassen sich optische Verkehrsinformationen, beispielsweise Verkehrs- und Hinweisschilder, Häuser, Wälder oder ähnliches, die häufig zusätzliche und nützliche Informationen liefern, mit einem solchen Navigationssystem nicht erfassen.

Ausgehend davon liegt der vorliegenden Erfindung daher die Aufgabe zugrunde, ein Navigationssystem und ein Verfahren zum Betreiben eines Navigationssystems bereitzustellen, die auch zur Verarbeitung von optischen Verkehrsinformationen geeignet sind.

Die systembezogene Aufgabe wird erfindungsgemäß durch ein Navigationssystem mit den Merkmalen des Patentanspruchs 1, die verfahrensbezogene Aufgabe durch ein Verfahren zum Betreiben eines Navigationssystems mit den Merkmalen des Patentanspruchs 2 gelöst.

Demgemäß ist ein Navigationssystem für ein Kraftfahrzeug vorgesehen,
- mit einer Karteninformation-Speichereinrichtung zum Speichern von Kartendaten,
- mit einer Momentanposition-Erfassungseinrichtung zum Identifizieren der Momentanposition des sich bewegenden Kraftfahrzeugs mit Hilfe der in der Karteninformation-Speichereinrichtung abgespeicherten Kartendaten,
- mit einer Bildverarbeitungseinrichtung zur optischen Erkennung von Bilddaten,
- mit einer Verarbeitungseinrichtung zur Verarbeitung und Steuerung der durch die Momentanposition-Erfassungseinrichtung gewonnenen Positionsdaten und der durch die Bildverarbeitungseinrichtung gewonnenen Bilddaten und
- mit einer Ausgabevorrichtung zur Darstellung der durch die Verarbeitungseinrichtung ermittelten Verkehrsdaten für den Kraftfahrzeugnutzer.

Ferner ist ein Verfahren zum Betreiben eines Navigationssystems für Kraftfahrzeuge vorgesehen, bei dem Positionsdaten über die momentane Fahrzeugposition, die durch eine Momentanposition-Erfassungseinrichtung mit Hilfe von in einer Karteninformation-Speichereinrichtung abgespeicherten Kartendaten ermittelt wurden, mit Bilddaten, die durch Bildverarbeitung von optischen Informationen ermittelt wurden, mittels einer Bildverarbeitungseinrichtung kombiniert, ausgewertet und als Verkehrsdaten ausgegeben werden.

Auf diese Weise wird mithin ein Navigationssystem zur intelligenten Erkennung, Darstellung und Verarbeitung von Verkehrs- und Hinweisschildern sowie anderer Bildinformationen durch geeignete Kombination eines bekannten Navigationssystems mit einer Vorrichtung zur Bilderkennung bereitgestellt. Beispielsweise gilt bekanntlich eine Geschwindigkeitsbegrenzung immer nur bis zur nächsten Kreuzung. Das System kann in diesem Falle gezielt nach Hinweis- oder Verkehrsschildern nach dem Passieren von Kreuzungen suchen. Häuser am Straßenrand lassen auf eine Ortschaft schließen, wohingegen mehrere zusammenstehende Bäume an beiden Seiten des Kraftfahrzeuges auf einen Wald, d. h. auf einen Bereich außerhalb einer Ortschaft, schließen lassen. Dadurch wird die Informationssicherheit für den Kraftfahrzeugnutzer und die Leistungsfähigkeit des Systems insbesondere durch Ausnutzung von redundanten Informationen signifikant gesteigert.

Weitere vorteilhafte Ausgestaltungen und Weiterbildungen der Erfindungen sind den Unteransprüchen, der folgenden Beschreibung und den Figuren entnehmbar.

Die Erfindung wird nachfolgend anhand der in den Figuren der Zeichnung angegebenen Ausführungsbeispielen näher erläutert. Es zeigt dabei:
- Figur 1: ein allgemeines Blockschaltbild eines erfindungsgemäßen Navigationssystems für Kraftfahrzeuge;
- Figur 2: ein detailliertes Blockschaltbild eines erfindungsgemäßen Navigationssystems für Kraftfahrzeuge.

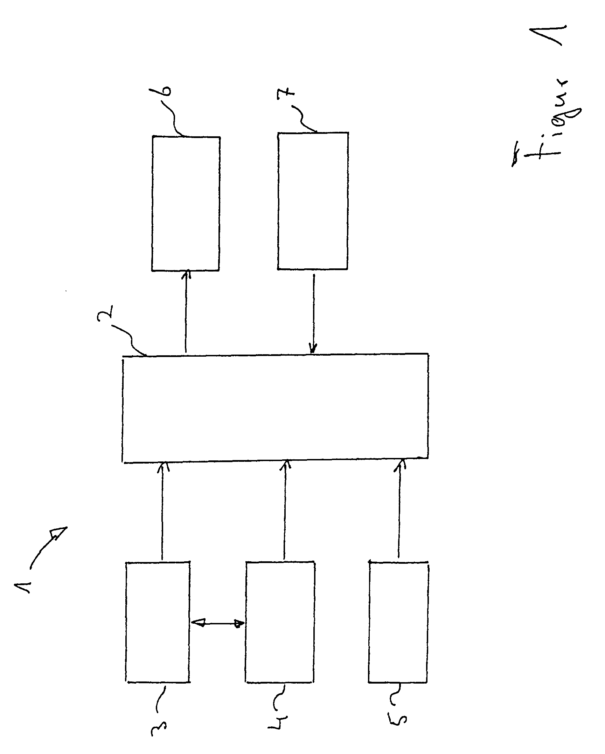

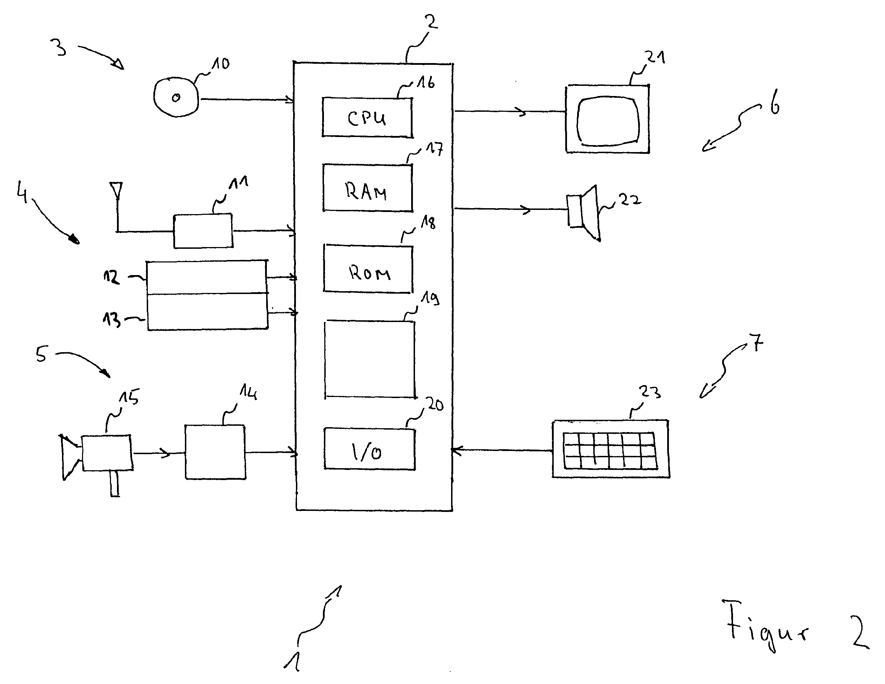

In Figur 1 ist mit 1 ein Navigationssystem für Kraftfahrzeuge bezeichnet. Das Navigationssystem weist eine Verarbeitungseinrichtung 2 auf. Die Verarbeitungseinrichtung 2 ist mit einer Karteninformation-Speichereinrichtung 3, einer Momentanposition-Erfassungseinrichtung 4 und einer Bildverarbeitungseinrichtung 5 verbunden. In der Karteninformation-Speichereinrichtung 3 sind Kartendaten, wie Straßenführungen, Straßennamen, Wegkreuzungen oder ähnliches, abgelegt. Die Momentanposition-Erfassungseinrichtung 4 weist Mittel zum Identifizieren der aktuellen Momentanposition eines Kraftfahrzeuges auf und ist üblicherweise mit der Karteninformation-Speichereinrichtung 3 gekoppelt. Die Bildverarbeitungseinrichtung 5 weist Mittel zur optischen Erkennung von Bildinformationen, wie beispielsweise Verkehrsschilder, Hinweisschilder, oder ähnliches auf. Die Verarbeitungseinrichtung 2 weist Mittel zur Verarbeitung von Positionsdaten und Bilddaten und zur Steuerung des Navigationssystems auf. Der Aufbau und die genaue Funktionsweise dieser Elemente wird anschließend anhand von Figur 2 näher beschrieben.

Die Verarbeitungseinrichtung 2 ist ferner mit einer Ausgabevorrichtung 6 verbunden, mittels der die ermittelten Verkehrsinformationen dem Kraftfahrzeugnutzer in geeigneter Weise dargestellt werden. Darüber hinaus kann die Verarbeitungseinrichtung 2 auch noch mit einer Eingabevorrichtung 7 verbunden sein, über die ein Kraftfahrzeugnutzer Daten, wie beispielsweise ein persönliches Fahrerprofil, eine gewünschte Routenführung, etc., in die Verarbeitungseinrichtung 2 eingekoppelt kann.

Figur 2 zeigt ein detailliertes Ausführungsbeispiel des erfindungsgemäßen Navigationssystems entsprechend Figur 1. Gleiche bzw. funktionsgleiche Elemente sind hier mit gleichen Bezugszeichen versehen worden.

Das Navigationssystem 1 in Figur 2, das entsprechend dem Navigationssystem in Figur 1 aufgebaut ist, ist als sogenanntes On-Board-Navigationssystem ausgebildet. On-Board-Navigationssysteme sind dadurch gekennzeichnet, daß alle benötigten Kartendaten mehr oder weniger aktuell in Form von elektronischen Daten im Fahrzeug mitgeführt werden. Die Karteninformation-Speichereinrichtung 3, die diese Kartendaten enthält, ist in Figur 2 daher als Festplatte 10 ausgebildet. Alternativ wäre es jedoch auch denkbar, ein sogenanntes Off-Board-Navigationssystem zu verwenden, bei dem die entsprechenden Kartendaten in einem fahrzeugexternen Speicher oder einer Zentrale abgespeichert sind und dem Fahrzeugnutzer diese Kartendaten von der Zentrale über Funk übermittelt werden.

Die Momentanposition-Erfassungseinrichtung 4 weist im vorliegenden Ausführungsbeispiel einen GPS-Empfänger 11, einen Richtungssensor 12 sowie einen Distanzsensor 13 auf. Die Bildverarbeitungseinrichtung 5 enthält ein optisches Aufnahmegerät 14, beispielsweise eine Kamera, sowie eine Muster- oder Bilderkennungseinrichtung 15. Eine solche Mustererkennungseinrichtung 15 ist geeignet, die gewünschten optischen Informationen, wie beispielsweise Hinweis- oder Verkehrsschilder mit gängigen Mustern zu vergleichen und zu erkennen. Mustererkennungseinrichtung 15 sind seit langem in vielen Ausführungsformen bekannt und bedürfen daher keiner näheren Erläuterung. Moderne intelligente Mustererkennungseinrichtungen 15 sind zum Zweck der Verringerung der Rechenleistung mit einem trainierten neuronalen Netzwerk ausgestattet. Besonders vorteilhaft ist es ferner, wenn die optische Aufnahmeeinrichtung 14 als Infrarotkamera ausgebildet ist, so daß die Bildverarbeitungseinrichtung 5 sowohl bei Tag als auch bei Nacht funktionsfähig ist.

Die Verarbeitungseinrichtung 2 weist in bekannter Weise eine zentrale Recheneinheit 16 (CPU = Central Processing Unit), einen Schreib-/Lesespeicher 17, einen Festwertspeicher 18, eine Anzeigesteuereinheit 19 sowie eine Eingabe/Ausgabeeinheit (I/O-Unit) 20 auf. Die zentrale Recheneinheit 16 ist im vorliegenden Beispiel als CPU ausgebildet kann jedoch auch durch einen Signalprozessor oder eine sonstige programmgesteuerte Einheit realisiert sein. Im Schreib-/Lesespeicher 17, der im vorliegenden Ausführungsbeispiel als RAM-Speicher ausgebildet ist, können aktuelle Positionsdaten und Bilddaten abgelegt werden. Der Festwertspeicher 18, der im vorliegenden Beispiel als ROM-Speicher ausgebildet ist, enthält typischerweise die Programmcodes für die zentrale Recheneinheit 16. Die Eingabe-/Ausgabeeinheit 20 bildet die Schnittstelle zu externen Einheiten und enthält typischerweise Eingangs- und Ausgangstreiberschaltungen.

Die Ausgabevorrichtung 6 ist im vorliegenden Ausführungsbeispiel als Display oder Monitor 21 zur Darstellung der durch die Verarbeitungseinrichtung 2 gewonnenen Verkehrsinformationen ausgebildet. Zusätzlich oder alternativ kann die Ausgabevorrichtung 6 auch durch einen Lautsprecher realisiert sein. Die Eingabevorrichtung 7 dient der Eingabe der vom Fahrzeugnutzer gewünschten Informationen und ist typischerweise eine Tastatur.

Nachfolgend wird das erfindungsgemäße Verfahren zum Betreiben des Navigationssystems anhand der Figuren beschrieben.

Über die Momentanposition-Erfassungseinrichtung 4 werden mit Hilfe von in der Karteninformation-Speichereinrichtung 3 abgespeicherten Kartendaten die aktuelle, d. h. die momentane Fahrzeugposition ermittelt. Diese genaue Bestimmung der Fahrzeugposition läßt sich heutzutage sehr exakt mittels des allgemein bekannten GPS-Systems durchführen. Zusätzlich werden optische Informationen - beispielsweise Verkehrs- oder Hinweisschilder, Wälder oder Baumgruppen, markante Häuser, Wegkreuzungen - mittels der Bildverarbeitungseinrichtung 5 erfaßt und verarbeitet. Über die Verarbeitungseinrichtung 2 lassen sich diese Bilddaten und die Positionsdaten kombinieren und auswerten. Die dadurch gewonnenen Verkehrsinformationen können dem Fahrzeugnutzer dann über das Display 21 zur Verfügung gestellt werden.

### Bezugszeichenliste

- 1: Navigationssystem
- 2: Verarbeitungseinrichtung
- 3: Karteninformation-Speichereinrichtung
- 4: Momentanposition-Erfassungseinrichtung
- 5: Bildverarbeitungseinrichtung
- 6: Ausgabevorrichtung
- 7: Eingabevorrichtung

- 10: Festplatte
- 11: GPS-Empfänger
- 12: Richtungssensor
- 13: Distanzsensor
- 14: optische Aufnahmeeinrichtung, Kamera
- 15: Muster- Bilderkennungseinrichtung
- 16: zentrale Recheneinheit, CPU
- 17: Schreib-/Lesespeicher, RAM-Speicher
- 18: Festwertspeicher, ROM-Speicher
- 19: Anzeigesteuereinrichtung
- 20: Eingabe-/Ausgabeeinheit, I/O-Unit
- 21: Monitor, Display
- 22: Lautsprecher
- 23: Tastatur

## Patentansprüche

1. Navigationssystem für ein Kraftfahrzeug,
- mit einer Karteninformation-Speichereinrichtung (3) zum Speichern von Kartendaten,
- mit einer Momentanposition-Erfassungseinrichtung (4) zum Identifizieren der Momentanposition des sich bewegenden Kraftfahrzeugs mit Hilfe der in der Karteninformation-Speichereinrichtung (3) abgespeicherten Kartendaten,
- mit einer Bildverarbeitungseinrichtung (5) zur optischen Erkennung von Bilddaten,
- mit einer Verarbeitungseinrichtung (2) zur Verarbeitung und Steuerung der durch die Momentanposition-Erfassungseinrichtung (4) gewonnenen Positionsdaten und der durch die Bildverarbeitungseinrichtung (5) gewonnenen Bilddaten und
- mit einer Ausgabevorrichtung (6) zur Darstellung der durch die Verarbeitungseinrichtung (2) ermittelten Verkehrsdaten für den Kraftfahrzeugnutzer.

2. Verfahren zum Betreiben eines Navigationssystems (1) für ein Kraftfahrzeug, bei dem Positionsdaten über die momentane Fahrzeugposition, die durch eine Momentanposition-Erfassungseinrichtung (4) mit Hilfe von in einer Karteninformation-Speichereinrichtung (3) abgespeicherten Kartendaten ermittelt wurden, mit Bilddaten, die durch Bildverarbeitung von optischen Informationen ermittelt wurden, mittels einer Bildverarbeitungseinrichtung (5) kombiniert, ausgewertet und als Verkehrsdaten ausgegeben werden.

3. Navigationssystem und Verfahren nach einem der Ansprüche 1 oder 2,
**dadurch gekennzeichnet,**
daß die Bildverarbeitungseinrichtung (5) zumindest eine Kamera (14) zur Aufnahme von Bildern und eine Mustererkennungseinrichtung (15) zum Erkennen von Verkehrs- und Hinweisschildern und Verarbeiten dieser Daten zu Bilddaten aufweist.

4. Navigationssystem und Verfahren nach einem der vorstehenden Ansprüche,
**dadurch gekennzeichnet**,
daß die Momentanposition-Erfassungseinrichtung (4) zumindest einen GPS-Empfänger (11), einen Richtungssensor (12) und einen Distanzsensor (13) zur Ermittlung der aktuellen Fahrzeugposition aufweist.

5. Navigationssystem und Verfahren nach einem der vorstehenden Ansprüche,
**dadurch gekennzeichnet**,
daß die Verarbeitungseinrichtung (2) zumindest eine Recheneinheit (16) zur Steuerung des Navigationssystems (1) und eine Speichereinheit (17, 18) zur Speicherung der ermittelten Positionsdaten und/oder Bilddaten aufweist.
